# DEMANDE DE BREVET EUROPEEN

(11) **EP 0 857 587 A1**
(43) Date de publication de la demande: **12.08.1998**
(21) Numéro de dépôt: 97204047.1
(22) Date de dépôt: 19.12.1997
(51) Int. Cl.: B44C 1/20

(54) **Feuille décorative à base de matière thermoplastique**

(30) Priorité: 09.01.1997 FR 9700267
(71) Demandeur: Griffine Enduction, 75008 Paris (FR)
(72) Inventeur: Antoine, Francis, 95690 Frouville (FR); Monguis, Jean-Pierre, 78300 Poissy (FR)
(74) Mandataire: Dambois, Denis Camille Daniel

(57) **Abrégé**

Feuille décorative comprenant un substrat (17,18,19) grainé à base de matière thermoplastique et au moins une matière de charge apparente, ainsi qu'un revêtement protecteur (20,21) superficiel substantiellement transparent à base de matière thermoplastique adjacent au substrat.

De manière avantageuse, cette feuille est fabriquée au moyen d'un procédé dans lequel le revêtement protecteur comprend au moins deux couches et est appliquée sur le substrat par enduction-transfert.

## Description

La présente invention concerne une feuille décorative à base de matière thermoplastique, pouvant notamment être utilisée dans l'ameublement et la maroquinerie.

Dans ces secteurs, on utilise couramment des feuilles obtenues par enduction au départ de polymères se prêtant à cette technique, tels que des plastisols de polychlorure de vinyle (PVC). Pour leur donner un aspect plus esthétique, ces feuilles sont souvent grainées, c'est-à-dire munies d'un relief superficiel. Toutefois, lorsque le grainage est prononcé, ces feuilles s'encrassent rapidement, et sont d'un entretien difficile. Il est naturellement envisageable de revêtir de telles feuilles d'une couche protectrice superficielle de matière plastique transparente, par exemple par enduction, mais ceci fait disparaître quasi-totalement l'effet de relief introduit par le grainage, ce qui rend moins esthétiques les feuilles ainsi obtenues.

Pour remédier à ces inconvénients, il a déjà été proposé (FR 1356316) de presser à chaud, entre deux plaques polies, un assemblage comprenant un tissu, un film de matière plastique chargée d'un pigment nacré et un film superficiel transparent, de façon à obtenir une feuille décorative d'aspect métallique dont la surface est lisse mais dans laquelle on distingue toujours nettement le relief du tissu. Cette technique présente cependant l'inconvénient que le motif visible du relief correspond obligatoirement à celui du tissu utilisé comme substrat, et ne peut pas être librement choisi. Si l'on envisageait de résoudre ce problème en utilisant un substrat constitué de matière thermoplastique, qu'il serait ainsi possible de grainer selon un motif quelconque, on obtiendrait des résultats médiocres dans la mesure où l'étape de pressage à chaud altérerait considérablement le grainage du substrat, aussi bien en ce qui concerne sa profondeur que sa régularité (dans le cas de motifs géométriques répétitifs).

La présente invention vise à remédier à ces inconvénients, et à fournir une feuille grainée facile à fabriquer présentant un aspect esthétique, un faible encrassement et un entretien facile, tout en paraissant présenter un relief prononcé. Elle vise également à fournir un procédé avantageux pour la fabrication de telles feuilles.

De manière plus précise, un premier aspect de la présente invention concerne une feuille décorative comprenant un substrat grainé à base de matière thermoplastique et au moins une matière de charge apparente, ainsi qu'un revêtement protecteur superficiel substantiellement transparent à base de matière thermoplastique adjacent au substrat.

Le substrat peut être monocouche ou multicouche. Lorsqu'il est multicouche, au moins la couche grainée du substrat est à base de matière thermoplastique. De préférence, elle en est constituée. Par matière thermoplastique, on entend désigner tout polymère ou mélange de polymères thermoplastique(s) tels que polyoléfines, polymères du chlorure de vinyle, polyuréthanes thermoplastiques, etc. Les "polymères" englobent à la fois les homopolymères et les copolymères (comprenant deux comonomères ou davantage). On peut éventuellement ajouter à ce ou ces polymères un ou plusieurs additifs classiques tels que lubrifiants, plastifiants, stabilisants, anti-oxydants, colorants, fibres de renforcement, etc. De préférence, la matière plastique utilisée pour la réalisation du substrat, ou le cas échéant de sa couche grainée, comprend un ou plusieurs polymères vinyliques, tel en particulier le polychlorure de vinyle (PVC). Le substrat peut éventuellement être coloré, que ce soit dans la masse ou superficiellement, de manière uniforme ou non, par exemple en utilisant un procédé d'impression. Une telle coloration peut éventuellement ne concerner qu'une ou certaines couches d'un susbtrat multicouche.

Le substrat est grainé sur au moins l'une de ses faces, laquelle doit être au moins partiellement visible dans la feuille décorative finie (ci-après dénommée "face visible") et est à base de matière thermoplastique comme précisé ci-dessus. Le grainage en question peut conférer au substrat un relief d'apparence répétitive ou aléatoire. Il peut être réalisé par toute technique connue, par exemple en faisant passer le substrat préchauffé entre deux cylindres dont l'un au moins est relativement dur et comporte un relief superficiel. L'un des avantages de la présente invention est que le grainage du substrat peut être prononcé (relief profond) sans que cela ne conduise à des inconvénients sur le plan de l'encrassement et de l'entretien de la feuille décorative finie. En particulier, le substrat peut présenter un relief superficiel de plus de 0,5 mm sans provoquer de tels inconvénients.

En vue d'améliorer l'aspect esthétique de la feuille, une variante avantageuse consiste à colorer les sommets de la face grainée du substrat avant de la revêtir du revêtement protecteur superficiel, par exemple par application d'un vernis ou d'une encre colorés.

Selon une variante avantageuse, la feuille décorative comprend en outre au moins une couche de matériau de support non-thermoplastique, adjacente au substrat, disposée du côté du substrat opposé au revêtement protecteur. A titre de telles couches de matériau de support, on peut notamment utiliser une ou plusieurs couches de tissu, de papier, de matière plastique thermodurcissable, etc., éventuellement adhésivées. On préfère que la feuille décorative comprenne une couche de tissu. Une telle couche de matériau de support étant généralement opaque, elle est (ou elles sont) adjacente(s) du côté du substrat opposé à sa face visible. Toutefois, comme précisé ci-dessus, cette face visible peut éventuellement être revêtue, totalement ou partiellement, d'une mince couche transparente, par exemple d'une couche de vernis coloré. Par ailleurs, le substrat peut éventuellement être imprimé sur une partie de sa surface visible. Ces étapes optionnelles visant à associer une ou plusieurs couches inférieures au substrat et/ou à en vernir ou imprimer la face visible peuvent s'effectuer avant ou après son grainage, en fonction des conditions opératoires imposées. Il faut en effet éviter d'endommager le grainage du substrat, par exemple en lui appliquant des températures et/ou des pressions excessives.

Selon une caractéristique originale de la présente invention, le substrat comprend au moins une matière de charge apparente, c'est-à-dire qui soit au moins partiellement visible lorsqu'on observe le substrat du côté de sa face visible.

Tout type de matière charge apparente peut être utilisé, par exemple une charge minérale telle que le talc, des particules cellulosiques telles que de bois, des particules métalliques, etc. La géométrie des particules de matière de charge apparente peut être quelconque, pour autant que l'aspect visuel résultant soit satisfaisant. On préfère que la matière de charge apparente se présente au moins partiellement - et de préférence à raison d'au moins 95 % en poids - sous la forme de paillettes, c'est-à-dire de particules dont l'épaisseur moyenne est de préférence inférieure à 1/10 de leur plus grande dimension mesurée selon une direction perpendiculaire. A titre de telles charges, on peut notamment citer le talc, la nacre et les paillettes métalliques. On utilise avantageusement des paillettes dont la plus grande dimension est comprise entre 6 et 150 µm. Selon une variante particulièrement préférée, la matière de charge apparente comprend de la nacre. Par nacre, on entend désigner non seulement la nacre naturelle, mais également les différents types de matériaux artificiellement nacrés, tels que notamment le carbonate de plomb, l'oxychlorure de bismuth, l'hydrogéno-arsenate de plomb, les particules de mica revêtues de minces couches de dioxyde de titane, etc. La nacre utilisée peut éventuellement être colorée par des pigments tels que l'oxyde de fer.

Afin d'accroître la visibilité de la matière de charge apparente utilisée, il est préférable que le substrat (dans le cas d'un substrat monocouche) soit à base d'une matière thermoplastique substantiellement transparente. Ceci n'empêche pas une éventuelle coloration. Dans le cas d'un substrat multicouche, cette transparence concerne à la fois la couche du substrat contenant la ou les matières de charge apparentes ainsi que la ou les éventuelles couches additionnelles interposées entre la couche chargée et le revêtement protecteur (par exemple une couche de vernis coloré).

La teneur pondérale de la ou des matières de charge apparentes par rapport au substrat (ou par rapport à la couche chargée du substrat, dans le cas d'un substrat multicouche) est choisie en fonction notamment de leur nature et de l'effet visuel souhaité ; lorsqu'on utilise de la nacre, de bons résultats ont été obtenus avec des teneurs pondérales inférieures à 20 %, de préférence inférieures à 5 %.

Plusieurs techniques différentes peuvent être utilisées pour incorporer la matière de charge apparente au substrat de façon apparente. Une première technique consiste à simplement mélanger la matière de charge apparente à la matière thermoplastique constitutive du substrat (ou du moins de sa couche chargée, dans le cas d'un substrat multicouche) avant ou pendant la mise en oeuvre de ladite matière (par extrusion, calandrage, etc.).

Afin de réduire la quantité de matière de charge apparente consommée, et de garantir qu'une forte proportion en soit apparente, une seconde technique consiste à revêtir une ou plusieurs couches inférieures du substrat fabriquées préalablement, éventuellement dépourvues de charges, d'une mince couche supérieure de matière thermoplastique contenant la ou les matières de charge voulues. Cette étape de revêtement peut notamment se réaliser par enduction, en portant ladite matière thermoplastique au-delà de sa température de fusion et en l'appliquant au moyen d'une filière plate et/ou d'une racle uniformisant l'épaisseur de la matière déposée. Alternativement, ce revêtement peut s'effectuer à température ambiante, par exemple par application d'un vernis auquel a été mélangée la matière de charge apparente. Ce revêtement peut encore s'effectuer par contrecollage d'une feuille chargée sur la ou les couches inférieures du substrat, à l'intervention éventuelle d'un adhésif.

La plupart de ces techniques de revêtement s'appliquent au substrat avant son grainage ; toutefois, certaines d'entre elles, par exemple l'application d'un vernis chargé, peuvent éventuellement être appliquées après le grainage du substrat.

Le revêtement protecteur superficiel appliqué sur le substrat est à base d'une matière thermoplastique substantiellement transparente. De préférence, il en est constitué. Cette matière peut notamment être choisie parmi celles présentées ci-dessus comme convenant à la réalisation de la couche chargée du substrat. En outre, il est préférable que cette matière thermoplastique :
- ne soit pas collante au toucher après solidification, et/ou
- soit de faible viscosité dans l'état où elle se trouve au moment de sa mise en oeuvre (en particulier d'une viscosité de préférence inférieure à 100 Poises), (mesurée pour les plastisols à 20 °C, au moyen d'un appareil Brookfield LVF, mobile 5, vitesse de 20 tr/min.), et/ou
- soit gélifiante ou filmogène à basse température (c'est-à-dire qu'elle puisse être mise en oeuvre à faible température, de préférence à température ambiante).

On préfère utiliser un plastisol à base de copolymère chlorure de vinyle - acétate de vinyle.

En outre, il est avantageux que le revêtement protecteur superficiel soit substantiellement exempt de matière de charge apparente. Il n'est cependant pas exclu qu'il soit coloré (par exemple dans la masse, ou encore en superposant ou interposant une couche colorée).

Le revêtement protecteur superficiel peut être monocouche ou multicouche. Avantageusement, il comprend au moins deux couches. Selon une variante préférée, le revêtement protecteur comprend deux couches. Un revêtement multicouche peut notamment être obtenu par coextrusion, ou encore par enduction ou vernissage d'une première couche obtenue préalablement. Dans le cas d'un revêtement protecteur superficiel multicouche, les caractéristiques qui précèdent concernent la couche du revêtement protecteur qui est en contact avec le substrat. La ou les autres couches ne doivent pas forcément présenter les mêmes propriétés rhéologiques (viscosité au fondu, gélifiabilité, filmogénéité, ...), mais doivent également être substantiellement transparentes sur au moins une partie de leur surface. Il est envisageable de rendre partiellement ou totalement opaques une ou plusieurs parties du revêtement protecteur, par exemple par impression, de manière à créer des effets visuels particuliers.

Comme exposé ci-dessus, le revêtement protecteur superficiel est adjacent au substrat, et plus précisément à la face visible de celui-ci, ce qui signifie que cette dernière est revêtue dudit revêtement protecteur. Ceci n'exclut toutefois pas que leur soient interposées une ou plusieurs couches de faible épaisseur telles que de vernis, d'encre, d'adhésif, etc., que l'on peut considérer comme faisant partie du substrat.

De préférence, la face extérieure de la feuille décorative est substantiellement lisse; en particulier, ses variations de planéité, mesurées par rapport au niveau moyen de sa surface, n'excèdent pas 1/10 de la profondeur du grainage du substrat (considéré comme égal à la différence d'altitude entre les sommets et les creux du relief créé par le grainage), de préférence par 1/20 de sa profondeur. La face "extérieure" de la feuille décorative que l'on considère ici est la face libre du revêtement protecteur superficiel, qui sera normalement apparente dans les applications de la feuille.

La possibilité d'obtenir une feuille présentant à la fois une apparence de relief marquée et une surface relativement lisse constitue l'un des avantages de la présente invention. En particulier, même lorsque le substrat a subi un grainage profond, son relief peut uniquement se constater par transparence, et n'affecte pas la planéité de la surface de la feuille. On évite ainsi de distinguer par réflexion le motif du grainage du substrat, ce qui est généralement inesthétique. De telles feuilles décoratives peuvent notamment être utilisées pour revêtir des sièges ou pour fabriquer des articles de maroquinerie tels que notamment des sacs, des chaussures ou des chapeaux. La facilité d'entretien des feuilles de l'invention est particulièrement avantageuse dans ces contextes.

Un autre aspect de la présente invention concerne un procédé particulier permettant de fabriquer des feuilles décoratives telles que décrites ci-dessus.

En effet, dans la fabrication de ces feuilles, une étape délicate est celle de l'application du revêtement protecteur transparent sur le substrat, durant laquelle ce dernier, et en particulier son grainage, risquent d'être altérés.

A cette fin, il est avantageux d'utiliser un procédé de fabrication d'une feuille décorative comprenant un substrat grainé à base de matière thermoplastique et au moins une matière de charge apparente, ainsi qu'un revêtement protecteur superficiel substantiellement transparent à base de matière thermoplastique adjacent au substrat, dans lequel le revêtement protecteur comprend au moins deux couches et est appliquée sur le substrat par enduction-transfert.

La réalisation du revêtement protecteur comprend généralement deux étapes.

La première étape est celle de la réalisation de la première couche dudit revêtement, qui constituera in fine la couche superficielle de la feuille décorative.

Selon une première variante, la première couche du revêtement protecteur est réalisée par enduction. A cette fin, on utilise un support temporaire (T) souple - de préférence lisse - constitué par exemple d'une bande de papier glacé ou siliconé. Ce support temporaire est revêtu d'une couche (A) de matière plastique substantiellement transparente, par exemple au moyen d'une filière plate et/ou d'une racle uniformisant l'épaisseur déposée. On peut utiliser toute matière plastique adéquate à cette fin, par exemple un plastisol de PVC ou de polyuréthane, un latex acrylique réticulable, etc. On prégélifie ou réticule si nécessaire cette matière plastique par augmentation de température de manière à la solidifier.

Selon une seconde variante, la première couche du revêtement protecteur est obtenue en portant une matière thermoplastique au-delà de sa température de tusion, et en la transformant en une feuille par calandrage, extrusion-soufflage, extrusion-couchage, etc. On peut utiliser à cette fin toute matière thermoplastique convenant à ces procédés, par exemple une polyoléfine ou un polymère du chlorure de vinyle.

Dans une seconde étape, la première couche (A) ainsi obtenue (munie le cas échéant de son support temporaire T) est revêtue d'une seconde couche (B) d'une matière thermoplastique substantiellement transparente apte à épouser le relief de la face visible - grainée - du substrat (par exemple un plastisol). Les caractéristiques préférentielles de cette seconde matière plastique ont été décrites ci-dessus (faible viscosité au fondu, gélifiabilité, filmogénéité, ...). Ces caractéristiques permettent d'éviter que le grainage du substrat ne soit altéré lors de l'application du revêtement protecteur, qui impose généralement d'exercer une pression sur l'ensemble substrat/revêtement.

La seconde couche (B) doit avoir une épaisseur suffisante pour "combler" les creux de la surface grainée du substrat sans nécessiter de déformation (substantielle) de la première couche (A), et donc sans altérer sa planéité. Cette dernière peut dès lors être aussi rigide que l'exige l'application envisagée. Le fait que le revêtement protecteur superficiel soit constitué de deux couches pouvant être constituées de matières thermoplastiques présentant des propriétés distinctes - l'une (A) étant optimisée sur le plan de la résistance mécanique et l'autre (B) sur le plan de l'adaptation au relief du substrat - constitue un avantage important de l'invention.

L'ensemble A/B (ou T/A/B) ainsi obtenu est alors appliqué et pressé contre le substrat, la seconde couche (B) étant en contact avec la face visible du substrat. Dans la perspective de cette opération, la matière plastique constitutive de la couche B peut utilement comprendre un agent de débullage tel que par exemple des hydrocarbures aliphatiques ou des agents mouillants.

Selon une variante avantageuse, le revêtement protecteur est pressé contre le substrat à un moment où la couche du revêtement protecteur appliquée sur le substrat se trouve dans un état visqueux.

Selon une première sous-variante, la seconde couche (B) est constituée d'un plastisol qui n'est pas encore gélifié au moment de l'application de l'ensemble (T/)A/B sur la face grainée du substrat. La faible viscosité du plastisol constitutif de la couche B lui permet d'épouser parfaitement le relief superficiel de la face visible - grainée - du substrat sous l'effet de la pression extérieure exercée lors de l'application de l'ensemble (T/)A/B sur le substrat. Par ailleurs, cette pression provoque l'évacuation d'un éventuel excès du plastisol, qui peut aisément être éliminé. La feuille ainsi obtenue passe alors dans un four de manière à provoquer la gélification de la couche B, après quoi l'éventuel support temporaire (T) est séparé de la feuille décorative proprement dite. Si son état le permet, ce support temporaire (T) peut être réutilisé dans des séquences ultérieures de production ; dans certains cas, il peut même constituer une bande sans fin et être ainsi réutilisé en continu dans la même séquence de production.

Selon une seconde sous-variante, la couche B a été portée à une température (T_{B}) à laquelle sa matière plastique constitutive présente une viscosité suffisamment faible pour épouser, sous pression, le relief du substrat comme exposé ci-dessus. Dans ce cas, la couche B est de préférence constituée d'une matière plastique telle qu'à la fois la couche A et la surface du substrat restent substantiellement solides à la température T_{B}, de façon à éviter d'endommager le grainage du substrat.

Une ou plusieurs autres couches de matière thermoplastique substantiellement transparente peuvent éventuellement être interposées entre la première couche (A) et la seconde couche (B).

### Description des dessins

Les figures annexées illustrent schématiquement, de façon non limitative, un procédé de fabrication de feuille décorative conforme à l'invention.

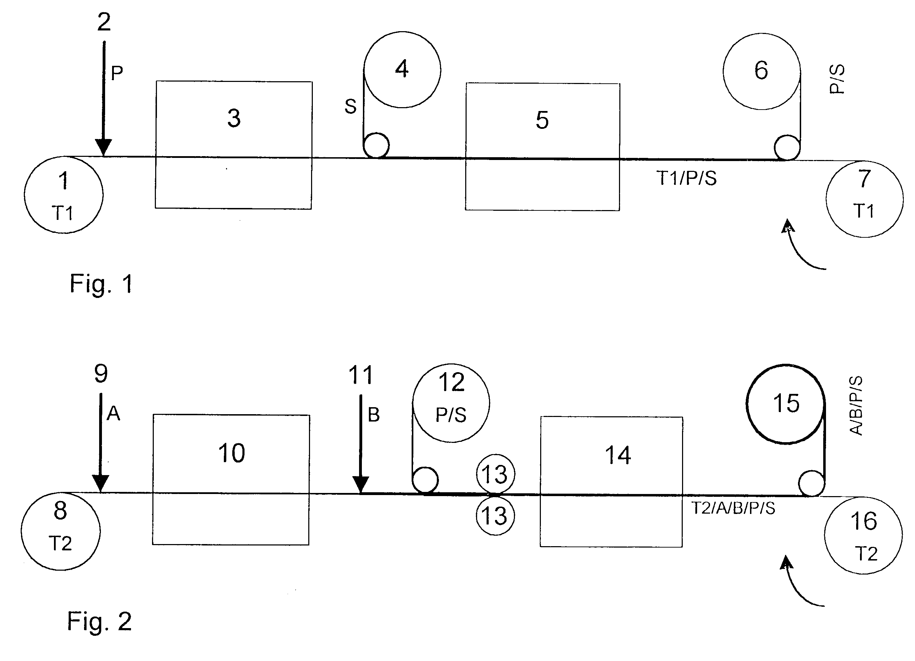

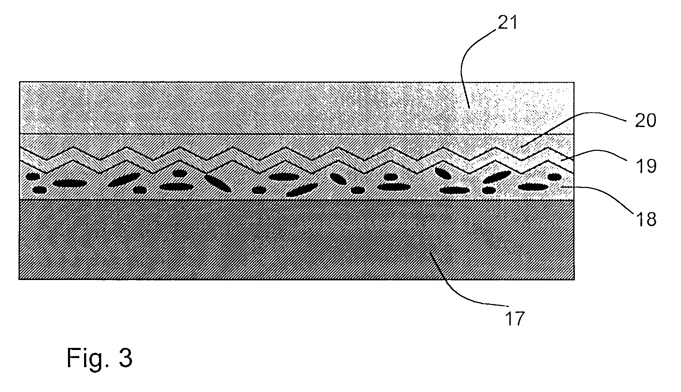

La figure 1 représente la réalisation du substrat. Un papier de transfert (T1), glacé, est déroulé à partir d'un rouleau (1), et enduit (2) d'un plastisol de PVC substantiellement transparent (P) chargé de paillettes de nacre. Le papier de transfert ainsi enduit (T1/P) passe dans un four (3) où le plastisol est pré-gélifié. Ensuite, l'ensemble T1/P est revêtu d'un support opaque (S) constitué de tissu, initialement enroulé sur un rouleau (4). L'ensemble T1/P/S ainsi formé passe dans un four (5) dans lequel on achève la gélification du plastisol. Le substrat P/S est finalement enroulé sur un rouleau (6) après avoir été séparé du papier de transfert T1, que l'on enroule sur un autre rouleau (7).

Dans une seconde étape, non-représentée, le substrat P/S est grainé sur sa face chargée (P).

La figure 2 représente la troisième étape du procédé de fabrication. Un papier de transfert T2 (8) est enduit (9) d'une première couche (A) de matière plastique transparente, constituée d'un plastisol de PVC. Après la pré-gélification de ce plastisol dans un four (10), l'ensemble T2/A est enduit (11) d'une seconde couche (B) de matière plastique transparente, constituée d'un plastisol de PVC. Sur l'ensemble T2/A/B ainsi obtenu, on applique le substrat grainé (P/S) obtenu dans les étapes antérieures, d'une manière telle que la face chargée (P) du substrat entre en contact avec la seconde couche (B) de l'ensemble T2/A/B. La feuille multicouche T2/A/B/P/S ainsi constituée est alors pressée entre deux cylindres de pressage (13), ce qui conduit la seconde couche (B), visqueuse, à épouser parfaitement le relief de la face visible (P) du substrat, et provoque l'évacuation des éventuels excès de matière plastique B. La feuille T2/A/B/P/S passe alors dans un four (14), ce qui provoque la gélification des matières plastiques A et B. Finalement, la feuille décorative A/B/P/S est enroulée sur un rouleau (15) après avoir été séparée du papier de transfert T2, que l'on récupère séparément (16).

La figure (3) représente en coupe la structure d'une feuille décorative conforme à l'invention. Le substrat (17/18/19) a été obtenu en revêtant un support (17) constitué d'un matériau résistant (tel que du tissu) par une couche (18) de matière plastique substantiellement transparente contenant des particules de nacre. Cet ensemble (17/18) a été grainé sur sa face chargée (18) puis enduit d'une couche (19) de vernis transparent coloré. Ce substrat grainé a été revêtu d'un revêtement protecteur superficiel substantiellement transparent à deux couches (20/21), dont la couche intérieure (20) épouse parfaitement le relief du substrat.

### Exemple

### L'exemple suivant illustre l'invention de façon non-limitative

Dans une première étape, on fabrique un substrat (Z) en déposant successivement sur une bande de papier-transfert lisse :
- une première couche d'un plastisol de PVC de type SOLVIC® 376 NB, plastifié, (250 g/m²) chargé de 3 à 5 g de paillettes de nacre (paillettes de mica + TiO₂ de marque SUPER SPARKLE®)par 100 g de plastisol ; et
- une couche de plastisol de PVC (250 g/m²) SOLVIC 373 ME, plastifié et pigmenté, contenant un agent moussant (azodicarbonamide).

Cet ensemble est prégélifié par passage dans un four à 150°C. Ensuite, on dépose encore :
- une seconde couche de plastisol de PVC SOLVIC 376 NB plastifié (100 g/m²), incolore et non-chargé,
- une couche de textile jersey gratté.

Cet ensemble traverse un four à 190°C, ce qui provoque l'expansion de l'agent moussant (formation d'une couche de mousse) et pré-gélifie l'ensemble, dont le papier-transfert est ensuite séparé.

Dans une seconde étape, après avoir porté ce substrat à 165°C, on en graine la face qui était initialement adjacente au papier-support sur une calandre à cylindre "reliefé", après quoi les sommets du grainage sont colorés par vernissage (vernis coloré).

Dans une troisième étape, on on enduit tout d'abord un papier-transfert glacé (T2) d'un plastisol de PVC incolore (120 g/m²)(A), destiné à constituer ultérieurement la face extérieure de la feuille décorative, que l'on pré-gélifié par traitement thermique à 130°C. On enduit alors cet ensemble T2/A d'un plastisol de PVC (B) (environ 250 g/m², à ajuster en fonction de la profondeur du grainage), sur lequel on applique ensuite le substrat Z précédemment fabriqué, d'une façon telle que sa face chargée de nacre entre en contact avec la couche B. L'ensemble Z/B/A/T2 ainsi obtenu est pressé entre deux cylindres presseurs, ce qui expulse l'excès éventuel de plastisol B, puis soumis à un dernier traitement thermique à 150°C, provoquant la gélification des plastisols A et B, avant d'en séparer le papier-transfert T2.

## Revendications

1. Feuille décorative comprenant un substrat grainé à base de matière thermoplastique et au moins une matière de charge apparente, ainsi qu'un revêtement protecteur superficiel substantiellement transparent à base de matière thermoplastique, adjacent au substrat.

2. Feuille selon la revendication 1, comprenant au moins une couche de matériau de support non-thermoplastique, adjacente au substrat, disposée du côté du substrat opposé au revêtement protecteur.

3. Feuille selon l'une des revendications précédentes, dans laquelle la matière de charge apparente se présente au moins partiellement sous la forme de paillettes.

4. Feuille selon l'une des revendications précédentes, dans laquelle la matière de charge apparente comprend de la nacre.

5. Feuille selon l'une des revendications précédentes, dans laquelle le revêtement protecteur comprend au moins deux couches.

6. Feuille selon l'une des revendications précédentes, dans laquelle la face extérieure de la feuille décorative est substantiellement lisse.

7. Procédé de fabrication d'une feuille décorative comprenant un substrat grainé à base de matière thermoplastique et au moins une matière de charge apparente, ainsi qu'un revêtement protecteur superficiel substantiellement transparent à base de matière thermoplastique adjacent au substrat, dans lequel le revêtement protecteur comprend au moins deux couches et est appliquée sur le substrat par enduction-transfert.

8. Procédé selon la revendication précédente, dans lequel le revêtement protecteur est pressé contre le substrat à un moment où la couche du revêtement protecteur appliquée sur le substrat se trouve dans un état visqueux.
